# EUROPEAN PATENT SPECIFICATION

(11) **EP 2 354 583 B1**
(45) Date of publication and mention of the grant of the patent: **09.05.2012**
(21) Application number: 10197033.3
(22) Date of filing: 27.12.2010
(51) Int. Cl.: F16D 23/06, F16H 3/00

(54) **Automatic dual-clutch transmission**
Automatikgetriebe mit Doppelkupplung
Transmission automatique à embrayage double

(30) Priority: 14.01.2010 JP 2010005764
(43) Date of publication of application: 10.08.2011
(73) Proprietor: AISIN AI Co., Ltd., Nishio-shi Aichi-ken 445-0006 (JP)
(72) Inventor: Kato, Hiroyuki c/o AISIN AI CO., LTD., Nishio-shi Aichi 445-0006 (JP); Ogami, Shiro c/o AISIN AI CO., LTD., Nishio-shi Aichi 445-0006 (JP)
(74) Representative: TBK

(56) References cited:
- DE-A1- 19 723 393
- JP-A- 58 214 021
- JP-A- 2008 185 192
- US-A- 3 620 338
- US-A1- 2007 289 399

## Description

### BACKGROUND OF THE INVENTION

### Field of the Invention:

The present invention relates to an automatic dual-clutch transmission having a dual clutch which is capable of transmitting the rotational drive power from a prime mover to two input shafts. Particularly, it relates to an automatic dual-clutch transmission with a parking lock function.

### Discussion of the Related Art:

Heretofore, there has been known an automatic dual-clutch transmission described in US2007/0289399 A1 (equivalent of JP2007-331654 A: hereafter referred to as "Patent Document 1"). This patent document, which discloses an automatic dual-clutch transmission according to the preamble of claim 1, describes performing a parking lock in parking a vehicle. The known transmission incorporates a plurality of engaging members which mate with respective gears trains and which are brought into engagements or disengagements for shifting the power transmissions through the respective gear trains, and the plurality of engaging members include a first speed engaging member which is brought into engagement in performing the power transmission through a first speed stage gear train, and a reverse engaging member which is brought into engagement through a reverse stage gear train. In performing a parking, the first speed engaging member and the reverse engaging member are simultanenously brought into engagements to establish the parking lock.

Further, Patent Document 1 also describes that a clutch mechanism for engaging or disengaging each gear train is provided with a clutch hub, an engaging member and a sleeve. That is, the clutch mechanism takes a construction that an external gear of the clutch hub and an internal gear of the sleeve are always in meshing and that the internal gear of the sleeve and the external gear of the engaging member are engaged or disengaged by axially moving the sleeve relative to the engaging member.

Further, as described in JP2008-185192 A (hereafter as referred to as "Patent Document 2") for example, the meshing surface of an internal gear of such a sleeve and the meshing surface of an external gear of such an engaging member are formed to flat shapes which are inclined relative to the axial direction so that the internal gear and the external gear are engaged with each other in a direction to be released. By forming the meshing surfaces to the shapes inclined relative to the axial direction, even when an axial disengaging force is exerted between the sleeve and the engaging member in the state that the internal gear of the sleeve and the external gear of the engaging member are held in meshing, the internal gear of the sleeve and the external gear of the engaging member are not easily released from the meshing state.

Where the construction of the sleeve and the engaging member described in Patent Document 2 is applied to the automatic dual-clutch transmission with the parking lock function described in Patent Document 1, there remains a room for improvement in the following respect. That is, since the meshing force between the internal gear of the sleeve and the external gear of the engaging member is great during the parking lock, an actuator for axially moving the sleeve in releasing the parking lock has to be strong in drive force. On the contrary, the sleeve should be firmly meshed with the engaging member during the running of the vehicle. If a disengaging force is exerted between the sleeve and the engaging member, the disengaging force would make a possibility that a contact load (i.e., a load caused by contact) is generated between the sleeve and a shaft fork which drives the sleeve.

JP-A-58 214021 discloses a tooth shape with parallel engaging surfaces.

It is the object of the present invention to provide an automatic dual-clutch transmission capable of reducing the drive power of a shift actuator which is required for releasing the parking lock, without giving rise to the problem caused by a contact load between a sleeve and shaft torque during the running of the vehicle.

The object of the invention is achieved with an automatic dual-clutch transmission for a vehicle having the features of claim 1.

Further advantageous developments of the invention are subject-matter of the dependent claims.

### SUMMARY OF THE INVENTION

Briefly, according to the present invention, there is provided an automatic dual-clutch transmission for a vehicle. The transmission comprises a first input shaft and a second input shaft arranged mutually coaxially; a first secondary shaft and a second secondary shaft arranged in parallel to the first and second input shafts; a dual clutch having a first clutch for transmitting the rotational drive power from a prime mover to the first input shaft and a second clutch for transmitting the rotational drive power to the second input shaft; a first gear change mechanism provided between both of the input shafts and the first secondary shaft and having gear trains of plural stages including a predetermined low speed stage, and a first shift clutch for bringing the gear trains into engagements with both of the input shafts and the first secondary shaft or disengagements therefrom; a second gear change mechanism provided between both of the input shafts and the second secondary shaft and having gear trains of plural stages including a reverse stage gear train, and a second shift clutch for bringing the gear trains of the second gear change mechanism into engagements with both of the input shafts and the second secondary shaft or disengagements therefrom; an output shaft for receiving the rotation of either of the first and second input shafts and the first and second secondary shafts; gears provided on one of the first and second input shafts and constituting a part of the low speed stage gear train and a part of the reverse stage gear train; a low speed stage shift clutch included in the first shift clutch for bringing one of the first and second input shafts into engagement with the low speed stage gear train; and a reverse stage shift clutch included in the second shift clutch for bringing one of the first and second input shafts into engagement with the reverse stage gear train. In performing a parking, the low speed stage shift clutch and reverse stage shift clutch are simultaneously engaged to establish a parking lock through connections of one of the first and second input shafts with the low speed stage gear train and the reverse stage gear train. Each of the first and second shift clutches comprises a clutch hub fixed on one of the first and second secondary shafts and having a gear formed on an external surface thereof; an engaging member rotatably provided on said one of the first and second secondary shafts and having a gear formed on an external surface thereof; and a sleeve being axially movable relative to the clutch hub and the engaging member and formed at an internal surface thereof with a gear which is always in meshing with the gear of the clutch hub and which is able to be brought into engagement with the gear of the engaging member or disengagement therefrom. In each of the low speed stage shift clutch and the reverse stage shift clutch, the gears of the engaging member and the sleeve are able to mesh with each other at side surfaces thereof which are formed to extend linearly in parallel to the axial direction thereof.

With this construction, in each of the low speed stage shift clutch and the reverse stage shift clutch which are simultaneously brought into engagements to establish a parking lock, the gears of the engaging member and the sleeve are able to mesh with each other at the side surfaces thereof which are formed to extend linearly in parallel to the axial direction thereof. Thus, the gear of the sleeve and the gear of the engaging member are able to mesh with each other in the circumferential direction but are prevented from meshing with each other in the axial direction. Accordingly, the drive power required for a shift actuator which moves the sleeve axially in releasing the parking lock can be reduced remarkably in comparison with the drive power required in the prior art transmission.

It is feared that because the gears of the sleeves and the engaging members are not engaged in the axial direction while being in meshing, a disengaging force exerted therebetween would generate a contact load between each sleeve and a shift fork mating therewith. However, in the present invention, the gear train in which the side surfaces of the sleeve and the engaging member are formed to extend linearly in parallel to the axial direction is set to each of the low speed stage gear train and the reverse stage gear train. Generally, it is for a short period of time that low speed stage gears or reverse stage gears are held in meshing during the running of the vehicle. Therefore, even if a disengaging force is exerted between the sleeve and the engaging member mating therewith, such disengaging force does not give rise to a problem because it is for a short period of time that a large contact load is imposed on the sleeve and the mating shift fork.

As described above, according to the present invention, it is possible to reduce the drive power for the shift actuator to generate at the time of releasing the parking lock, without giving rise to the problem that a contact load is exerted on the sleeve and the mating shift fork during the running of the vehicle. Further, the manufacturing cost can be reduced by forming the side surfaces on the gear of the sleeve and the side surfaces of the gear of the engaging member to surfaces which extend linearly in parallel to the axial direction. It is to be noted that the term "low speed stage gear train" means a gear train which is on the lower side than a center speed stage in a plurality of forward stages. For example, in the case of seven forward stages, the lower speed stage gear train means one of first to third speed stages.

### BRIEF DESCRIPTION OF THE DRAWINGS

The foregoing and many of the attendant advantages of the present invention may readily be appreciated as the same becomes better understood by reference to the preferred embodiments of the present invention when considered in connection with the accompanying drawings, wherein like reference numerals designate the same or corresponding parts throughout several views, and in which:
Figure 1 is a skeletal illustration showing the entire structure of an automatic dual-clutch transmission in a first embodiment according to the present invention;
Figure 2 is a fragmentary view showing a longitudinal sectional of a shift clutch;
Figure 3 is a development showing parts in the circumferential direction of external gears formed on engaging members S1, S3 and an internal gear formed on a sleeve M mating therewith;
Figure 4 is a perspective view showing one of shift actuator mechanisms 40 which respectively axially move sleeves mating therewith;
Figure 5 is an explanatory diagram for explaining the gear change operation of the automatic dual-clutch transmission in the first embodiment;
Figure 6 is a skeletal illustration showing the entire structure of an automatic dual-clutch transmission in a second embodiment according to the present invention;
Figure 7 is a schematic view as viewed from an axial end, showing the meshing relation between some gears in the automatic dual-clutch transmission in the second embodiment; and
Figure 8 is an explanatory diagram for explaining the gear change operation of the automatic dual-clutch transmission in the second embodiment.

### DETAILED DESCRIPTION OF THE PREFERRED EMBODIMENTS

Hereafter, embodiments of an automatic dual-clutch transmission according to the present invention will be described with reference to the drawings. A first embodiment will be described taking the example of an automatic dual-clutch transmission for an FR (front-engine rear-drive) vehicle, while a second embodiment will be described taking the example of an automatic dual-clutch transmission for an FF (front-engine front-drive) vehicle.

### (First Embodiment)

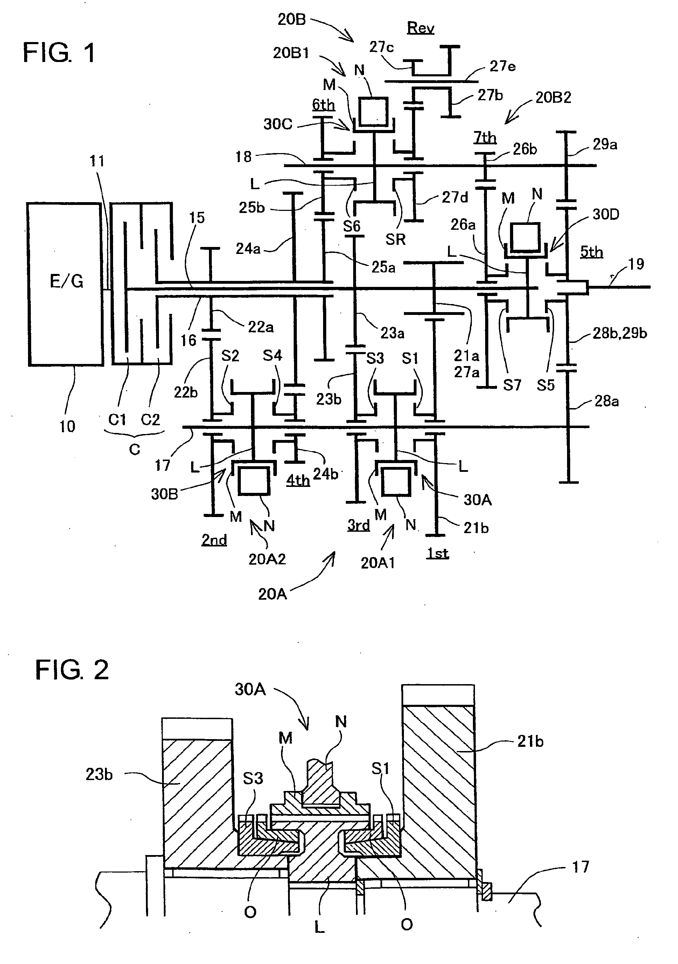

The automatic dual-clutch transmission 1 in the first embodiment will be described with reference to Figures 1-5. The transmission 1 in this embodiment is an automatic transmission with seven forward stages and one reverse stage for an FR vehicle. As shown in Figure 1, the transmission 1 has as shafts a first input shaft 15, a second input shaft 16, a first secondary shaft 17, a second secondary shaft 18, a reverse idle shaft 27e and an output shaft 19.

The second input shaft 16 is formed to a tubular shape and is provided rotatably relative to the first input shaft 15 as it surrounds the first input shaft 15 in a coaxial alignment. The first input shaft 15 protrudes its vehicle rear side end beyond a vehicle rear side end of the second input shaft 16. The first secondary shaft 17 and the second secondary shaft 18 are arranged in parallel to both of the input shafts 15, 16. The reverse idle shat 27e is arranged in parallel to the second secondary shaft 18. The output shaft 19 is arranged at a position behind the first input shaft 15 in the vehicle front-rear direction in axial alignment with the first input shaft 15.

The transmission 1 incorporates a dual clutch C which is rotationally drivable by a prime mover 10 such as an engine. The dual clutch C is constructed as normally open type in which the engaging state is released when the engine 10 is held stopped or is running with the vehicle remaining stopped.

The dual clutch C has a first friction clutch C1 and a second friction clutch C2. Each of these friction clutches C1, C2 is able to be coupled with the prime mover 10. The first friction clutch C1 is connected to the first input shaft 15, whereas the second friction clutch C2 is connected to the second input shaft 16. Thus, the first friction clutch C1 transmits the rotational drive power of the prime mover 10 to the first input shaft 15, and the second friction clutch C2 transmits the rotational drive power of the prime mover 10 to the second input shaft 16.

Further, the transmission 1 is provided as gear trains with a first gear change mechanism 20A provided between both of the first and second input shafts 15, 16 and the first secondary shaft 17, a second gear change mechanism 20B provided between both of the first and second input shafts 15, 16 and the second secondary shaft 18, a fourth shift clutch 30D for enabling the first input shaft 15 to be engaged with or disengaged from the output shaft 19, a first reduction gear train 28a, 28b for connecting the first secondary shaft 17 with the output shaft 19, and a second reduction gear train 29a, 29b for connecting the second secondary shaft 18 with the output shaft 19.

The first gear change mechanism 20A is composed of a first gear shift unit 20A1 provided between the first input shaft 15 and the first secondary shaft 17 and a second gear shift unit 20A2 provided between the second input shaft 16 and the first secondary shaft 17.

The first gear shift unit 20A1 is composed of a first speed gear train 21 a, 21 b, a third speed gear train 23a, 23b and a first shift clutch 30A. The first speed gear train 21 a, 21 b includes a drive gear 21 a (in common use as a reverse stage drive gear 27a) fixed on the first input shaft 15 and a driven gear 21 b rotatably provided on the first secondary shaft 17. The third speed gear train 23a, 23b includes a drive gear 23a fixed on the first input shaft 15 and a driven gear 23b rotatably provided on the first secondary shaft 17.

As shown in Figures 1 and 2, the first shift clutch 30A is composed of a clutch hub L, a first speed engaging member S1, a third speed engaging member S3, a pair of synchronizer rings O, and a sleeve M. The clutch hub L is fixed on the first secondary shaft 17 through a spline engagement between the first speed driven gear 21 b and the third speed driven gear 23b. The first speed engaging member S1 and the third speed engaging member S3 are members which are respectively fixed on the first speed driven gear 21 b and the third speed driven gear 23b by, e.g., press-fitting. The pair of synchronizer rings O are respectively interposed between the clutch hub L and the respective engaging members S1, S3 on the axially opposite sides of the clutch hub L. The sleeve M has an internal spline gear which is spline-engaged axially movably on an external spline gear of the clutch hub L.

The first shift clutch 30A constitutes a well-known synchromesh mechanism which enables one of the first and third speed driven gears 21 b, 23b to engage with the first secondary shaft 17 and also enables both of the first and third speed driven gears 21 b, 23b to be released from the first secondary shaft 17.

The sleeve M of the first shift clutch 30A is out of engagement with either of the engaging members S1, S3 in a neutral position shown in Figure 2. If shifted by a shift fork N engaged with an annular groove on the outer circumference thereof toward the first speed driven gear 21 b side, the sleeve M is first spline-engaged with an external gear of the synchronizer ring O on the same side and synchronizes the rotations of the first secondary shaft 17 and the first speed driven gear 21 b. Then, the sleeve M is engaged with an external spline formed on the outer circumference of the first speed engaging member S1 and bodily connects the first secondary shaft 17 with the first speed driven gear 21 b to establish a first speed stage. If shifted by the shift fork N toward the third speed driven gear 23b side, the sleeve M is likewise synchronizes the rotations of the first secondary shaft 17 and the third speed driven gear 23b and then, bodily connects both of them to establish a third speed stage.

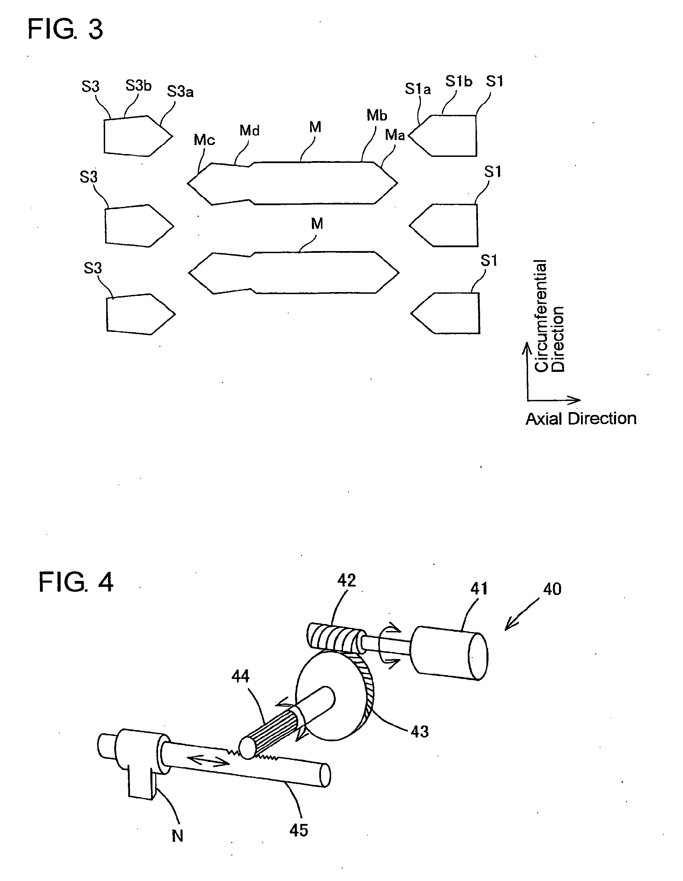

Figure 3 shows the circumferentially developed shapes of gear parts in the circumferential direction of the sleeve M, the first speed engaging member S1 and the third speed engaging member S3 in the first gear shift unit 20A1. As shown in Figure 3, regarding the gear shape of the sleeve M constituting the first gear shift unit 20A1, each internal gear tooth of the sleeve M is formed with a tip end portion Ma on the first speed engaging member S1 side, side portions Mb located at ends in the circumferential direction of the sleeve M and being able to mesh with side surfaces of the first speed engaging member S1, a tip end portion Mc on the third speed engaging member S3 side, and side portions Md located at ends in the circumferential direction of the sleeve M and being able to mesh with side surfaces of the third speed engaging member 3. Each of the tip end portions Ma, Mc is tapered to be pointed as its goes toward a distal end. Each of the side portions Mb on the first speed engaging member S1 side is formed to take a linear shape parallel to the axial direction in which the sleeve M is moved. On the other hand, each of the side portions Md on the third speed engaging member S3 side is formed to take a linear shape which is not parallel to the axial direction in which the sleeve M is moved. More specifically, the side portions Md on the third speed engaging member S3 side are formed as flat shapes which are tapered relative to the axial direction being the moving direction of the sleeve M so that the width in the circumferential direction between the side portions Md becomes wider as they come close toward the end side.

The first speed engaging member S1 is formed with a tip end portion S1a facing the tip end portion Ma of the sleeve M and tapered to become narrow as it goes toward the end side, and side portions S1b located at ends in the circumferential direction of the first speed engaging member S1 and being able to mesh with the side portions Mb of the sleeve M. The side portions S1b are formed to take linear shapes parallel to the axial direction in which the sleeve M is moved.

The third speed engaging member S3 is formed with a tip end portion S3a facing the tip end portion Mc of the sleeve M and tapered to become narrow as it goes toward the end side, and side portions S3b located at ends in the circumferential direction of the third speed engaging member S3 and being able to mesh with the side portions Md of the sleeve M. Each of the side portions S3b is formed to take a linear shape which is not parallel to the axial direction in which the sleeve M is moved. More specifically, the side portions S3b are formed as flat shapes which are tapered relative to the axial direction being the moving direction of the sleeve M so that the width in the circumferential direction between the side portions S3b becomes wider as they come close toward the end side (the right side as viewed in Figure 3).

Thus, when the side portions Mb of the gear teeth on the sleeve M and the side portions S1b of the gear teeth on the first speed engaging member S1 are meshed, they do not come to the state to engage with each other in the axial direction. On the contrary, when the side portions Md of the gear teeth on the sleeve M and the side portions S3b of the gear teeth on the third speed engaging member S3 are meshed, they are engaged in a direction to be released in the axial direction from the meshing state.

The second gear shift unit 20A2 is composed of a second speed gear train 22a, 22b, a fourth speed gear train 24a, 24b, and a second shift clutch 30B. Almost similarly to the case of the first gear shift unit 20A1, the second speed gear train 22a, 22b includes a drive gear 22a fixed on the second input shaft 16 and a driven gear 22b rotatably provided on the first secondary shaft 17. The fourth speed gear train 24a, 24b includes a drive gear 24a fixed on the second input shaft 16 and a driven gear 24b rotatably provided on the first secondary shaft 17.

The second shift clutch 30B constitutes a synchromesh mechanism which enables one of the second and fourth speed driven gears 22b, 24b to engage with the first secondary shaft 17 and also enables both of the second and fourth speed driven gears 22b, 24b to be released from the first secondary shaft 17.

The second shift clutch 30B is almost the same as the first shift clutch 30A in construction. While in the first shift clutch 30A, the first and third speed engaging members S1, S3 are respectively fixed on the first and third speed driven gears 21 b, 23b, the second shift clutch 308 differs from the first shift clutch 30A in that the second and fourth speed engaging members S2, S4 are respectively fixed on the second and fourth speed driven gears 22b, 24b. Further, the shapes of gears formed on the second and fourth speed engaging members S2, S4 are the same as the gear shape of the aforementioned third speed engaging member S3. The shape on axial opposite sides of a gear formed on an internal surface of the sleeve M constituting the second shift clutch 30B takes the same shape as the gear shape on the third speed engaging member S3 side of the sleeve M constituting first shift clutch 30A. Thus, in the second shift clutch 30B, the meshing of the sleeve M with the second speed engaging member S2 or with the fourth speed engaging member S4 is such that they are engaged in a direction to be released from the meshing state.

The sleeve M of the second shift clutch 30B is out of engagement with either of the engaging members S2, S4 in a neutral position shown in Figure 1. If shifted by a shift fork N engaged with an annular groove on the outer circumference thereof toward the second speed driven gear 22b side, the sleeve M synchronizes the rotations of the first secondary shaft 17 and the second speed driven gear 22b and then, bodily connects both of them to establish a second speed stage. If shifted by the shift fork N toward the fourth speed driven gear 24b side, the sleeve M synchronizes the rotations of the first secondary shaft 17 and the fourth speed driven gear 24b and then, bodily connects both of them to establish a fourth speed stage.

The second gear change mechanism 20B is composed of a third gear shift unit 20B1 and a fourth gear shift unit 20B2. The third gear shift unit 20B1 is provided between the second input shaft 16 and the second secondary shaft 18 as well as between the reverse idle shaft 27e and the second secondary shaft 18. The fourth gear shift unit 20B2 is provided between the first input shaft 15 and the second secondary shaft 18 as well as between the first input shaft and the output shaft 19.

The third gear shift unit 20B1 is composed of a sixth speed gear train 25a, 25b, a reverse stage gear train 27a, 27b, 27c, 27d and a third shift clutch 30C. The sixth speed gear train 25a, 25b includes a drive gear 25a fixed on the second input shaft 16 and a driven gear 25b rotatably provided on the second secondary shaft 18. The reverse stage gear train 27a, 27b, 27c, 27d includes the drive gear 27a (in common use as the first speed drive gear 21 a) fixed on the first input shaft 15, a driven gear 27d rotatably provided on the second secondary shaft 18 and a pair of idle gears 27b, 27c. The pair of idle gears 27b, 27c are formed bodily with each other, are rotatably provided on the reverse idle shaft 27e and are intervened between the drive gear 27a and the driven gear 27d to drivingly connect the same with each other.

The third shift clutch 30C takes substantially the same construction as the first shift clutch 30A. The third shift clutch 30C constitutes a synchromesh mechanism which enables one of the sixth speed driven gear 25b and the reverse stage driven gear 27d to engage with the second secondary shaft 18 and is able to bring both of the sixth speed driven gear 25b and the reverse stage driven gear 27d into disengagements from the second secondary shaft 18.

The sleeve M of the third shift clutch 30C is out of engagement with either of a sixth speed engaging member S6 and a reverse engaging member SR in a neutral position shown in Figure 1. The sixth speed engaging member S6 is secured to the sixth speed driven gear 25b, whereas the reverse engaging member SR is secured to the reverse stage driven gear 27d. If shifted by a shift fork N engaged with an annular groove on the outer circumference thereof toward the sixth speed driven gear 25b side, the sleeve M synchronizes the rotations of the second secondary shaft 18 and the sixth speed driven gear 25b and then, bodily connects both of them to establish a sixth speed stage. If shifted by the shift fork N toward the reverse stage driven gear 27d side, the sleeve M synchronizes the rotations of the second secondary shaft 18 and the reverse stage driven gear 27d and then, bodily connects both of them to establish a reverse stage.

Further, in the third shift clutch 30C, the sixth speed engaging member S6, the sleeve M and the reverse engaging member SR respectively take the same gear shapes as those of the third speed engaging member S3, the sleeve M and the first speed engaging member S1 shown in Figure 3.

The fourth gear shift unit 20B2 is composed of a seventh speed gear train 26a, 26b and the fourth shift clutch 30D. The seventh speed gear train 26a, 26b includes a drive gear 26a rotatably provided on a rear part of the first input shaft 15 and a driven gear 26b fixed on the second secondary shaft 18. The fourth shift clutch 30D is provided between the drive gear 26a of the seventh speed gear train which gear is rotatably provided on the rear part of the first input shaft 15, and a single driven gear designated by two reference numerals 28b, 29b which gear is fixed on a front end of the output shaft 19 in axial alignment of the drive gear 26a and which gear is common to first and second reduction gear trains.

The fourth shift clutch 30D is a synchromesh mechanism which takes the same construction as the second shift clutch 30B. The fourth shift clutch 30D only differs from the second shift clutch 30B in that a clutch hub L thereof is fixed on the rear end of the first input shaft 15 and that a fifth speed engaging member S5 and a seventh speed engaging member S7 are respectively fixed on the common driven gear 28b, 29b and the seventh speed drive gear 26a. The fourth shift clutch 30D is out of engagement with either of the engaging members S5, S7 in a neutral position shown in Figure 1. If the sleeve M is shifted by a shift fork N engaged with an annular groove on the outer circumference thereof toward the seventh speed drive gear 26a side, the rotations of the first input shaft 15 and the seventh speed drive gear 26a are synchronized, and then, both of them are bodily connected to establish a seventh speed stage. If the sleeve M is shifted by the shift fork N toward the common driven gear 28b, 29b side, the rotations of the input shaft 15 and the output shaft 19 are synchronized, and then, both of them are brought into a direct connection to establish a fifth speed stage.

Figure 4 typically shows one of shift actuator mechanisms 40 which respectively shift the aforementioned shift forks N in the axial direction. As shown in Figure 4, each shift actuator mechanism 40 is composed of a motor 41 with a worm gear 42 formed or fixed on a rotational shaft thereof, a worm wheel 43 meshing with the worm gear 42, a pinion gear formed rotatably together with the worm wheel 43 in axial alignment and a rack shaft 45 meshing with the pinion gear 44. A mating one of the shift forks N is bodily provided on the rack shaft 45. That is, the shift forks N are respectively provided on the respective rack shafts 45 of the respective shift actuator mechanisms 40. Thus, when the motors 41 of the respective shift actuator mechanisms 40 are rotated, the respective shift forks N which are in driving connections with the motors 41 are moved in the axial direction. Since each shift actuator mechanism 40 uses the worm gear 42 and the worm wheel 43, the driving force is transmitted only from the worm gear 42 toward the worm wheel 43, but is not transmitted reversely. That is, each shift actuator mechanism 40 has an anti-backslide function of preventing the mating shift fork N from being returned as a result of being forced by the sleeve M engaged therewith. The worm gear 42 and the worm wheel 43 constitutes an anti-backslide mechanism incorporated in each of the actuator mechanisms 40.

### (Operation of First Embodiment)

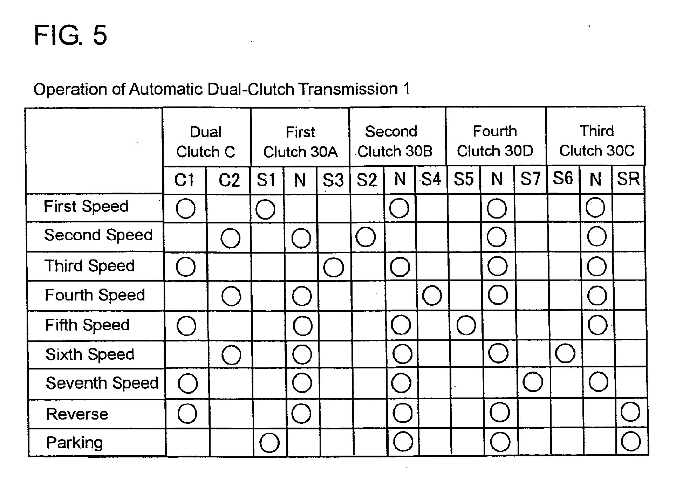

Next, the operation of the automatic dual-clutch transmission 1 in the first embodiment will be described with reference to Figure 5. A controller (not shown) for the transmission 1 controls the first and second friction clutches C1, C2 of the dual clutch C and the first to fourth shift clutches 30A-30D to operate as indicated in Figure 5 in dependence on the operating states of the vehicle such as throttle opening degree, engine rotational speed, vehicle speed and the like. In the state of an out-of-operation, the first and second friction clutches C1, C2 of the dual clutch C are both released, and each of the first to fourth shift clutches 30A-30D is in the neutral position.

Even when the engine 10 is started with the vehicle remaining stopped, the same state as the aforementioned state of the out-of-operation is maintained. When a shift lever (not shown) of the dual-clutch gear transmission 1 is set to a forward position after the engine 10 is started with the vehicle remaining stopped, the controller brings the first speed engaging member S1 of the first shift clutch 30A into engagement and holds each of other clutches in the neutral position, as indicated at "First Speed" in Figure 5, whereby the first speed stage is established. In this state, if the throttle opening degree is increased to make the rotation of the engine 10 go up beyond a predetermined rotational speed, the controller gradually increases the engaging force of the first friction clutch C1 of the dual clutch C to meet the throttle opening degree. Thus, the drive torque of the drive shaft 11 is transmitted from the first friction clutch C1 to the output shaft 19 through the first input shaft 15, the first speed gear train 21 a, 21 b (the drive gear 21 a is also used as the reverse stage drive gear 27a), the first speed engaging member S1 of the first shift clutch 30A, the first secondary shaft 17, and the first reduction gear train 28a, 28b, whereby the vehicle begins to travel at the first speed.

When with an increase in the throttle opening degree, the operating state of the vehicle comes to a state suitable for the second speed running, the controller first brings the second speed engaging member S2 of the second shift clutch 30B into engagement to establish the second speed stage, then shifts the dual clutch C toward the second friction clutch C2 side to effect the shifting to the second speed running, and finally releases the first speed engaging member S1 of the first shift clutch 30A, whereby the state is set to "Second Speed" indicated in Figure 5. Likewise, the controller successively selects the speed change stage suitable for the operating state of the vehicle at each of the third and fourth speeds and alternately selects the first and second friction clutches C1, C2, whereby the running is performed at the speed change stage suitable for the state.

When the operating state of the vehicle comes to the state suitable for the fifth speed running, the controller brings the fifth speed engaging member S5 of the fourth shift clutch 30D into engagement to directly couple the first input shaft 15 to the output shaft 19 and thereby to establish the fifth speed stage, then shifts the dual clutch C toward the first friction clutch C1 side to effect the shifting to the fifth speed running, and finally releases the fourth speed engaging member S4 of the second shift clutch 308, whereby the state is set to "Fifth Speed" indicated in Figure 5. In this case, the drive torque of the drive shaft 11 is transmitted from the first friction clutch C1 to the output shaft 19 through the first input shaft 15, the fifth speed engaging member S5 of the fourth shift clutch 30D. When the operating state of the vehicle comes to the state suitable for the sixth speed running, the controller brings the sixth speed engaging member S6 of the third shift clutch 30C into engagement to establish the sixth speed stage, then shifts the dual clutch C toward the second friction clutch C2 side to effect the shifting to the sixth speed running, and finally releases the fifth speed engaging member S5 of the fourth shift clutch 30D, whereby the state is set to "Sixth Speed" indicated in Figure 5. In this case, the drive torque of the drive shaft 11 is transmitted from the second friction clutch C2 to the output shaft 19 through the second input shaft 16, the sixth speed gear train 25a, 25b, the sixth speed engaging member S6 of the third shift clutch 30C, the second secondary shaft 18, and the second reduction gear train 29a, 29b.

When the operating state of the vehicle comes to the state suitable for the seventh speed running, the controller brings the seventh speed engaging member S7 of the fourth shift clutch 30D into engagement to establish the seventh speed stage, then shifts the dual clutch C toward the first friction clutch C1 side to effect the shifting to the seventh speed running, and finally releases the sixth speed engaging member S6 of the third shift clutch 30C, whereby the state is set to "Seventh Speed" indicated in Figure 5. At the sixth speed and the seventh speed, the rotational speed of the output shaft 19 is increased to be faster than the rotational speed of the drive shaft 11. Further, each time with a reduction in vehicle speed from a certain running state, the operating state of the vehicle comes to the state suitable for a lower speed stage running, the controller likewise successively selects lower speed stages suitable for the operating states of the vehicle and alternately selects the first and second friction clutches C1, C2 to shift the transmission 1 for the running at a speed change stage suitable for the operating state of the vehicle.

When the shift lever of the gear transmission 1 is set to the reverse position in the state that the engine 10 is operated with the vehicle remaining stopped, the controller detects the shifting to the reverse position and, as indicated at "Reverse" in Figure 5, brings the reverse engaging member SR of the third shift clutch 30C into engagement and holds other clutches in the neutral position to establish the reverse stage. When with an increase in the throttle opening degree, the rotational speed of the engine 10 exceeds a predetermined low rotational speed, the controller gradually increases the engaging force of the first friction clutch C1 of the dual clutch C to meet the throttle opening. Thus, the drive torque of the drive shaft 11 is transmitted from the first friction clutch C1 to the output shaft 19 through the first input shaft 15, the reverse stage gear train 27a, 27b, 27c, 27d (the drive gear 27a is also used as the first speed drive gear 21a), the reverse engaging member SR of the third shift clutch 30C, the second secondary gear 18, and the second reduction gear train 29a, 29b, whereby the vehicle begins to run backward.

When the shift lever of the gear transmission 1. is set to a parking position with the vehicle stopped, the controller detects the shifting to the parking position and, as indicated at "Parking" in Figure 5, brings the first speed engaging member S1 of the first shift clutch 30A into engagement and also simultaneously brings the reverse engaging member SR of the third shift clutch 30C into engagement. With the engagement of the first speed engaging member S1, there is made a state that the rotational power can be transmitted in one direction from the first input shaft 15 to the output shaft 19 through the first speed gear train 21 a, 21 b, the first speed engaging member S1 of the first shift clutch 30A, the first secondary shaft 17, and the first reduction gear train 28a, 28b. With the engagement of the reverse engaging member SR, on the other hand, there is made another state that the rotational power can be transmitted in the opposite direction from the first input shaft 15 to the output shaft 19 through the reverse stage gear train 27a, 27b, 27c, 27d, the reverse engaging member SR of the third shift clutch 30C, the second secondary shaft 18, and the second reduction gear train 29a, 29b. Accordingly, a so-called "double-meshing" state is made through the connection between the first speed gear train 21 a, 21 b and the first reduction gear train 28a, 28b in the forward direction and through the connection between the reverse stage gear train 27a, 27b, 27c, 27d and the second reduction gear train 29a, 29b in the reverse direction, whereby the parking lock is established.

Therefore, because the dual clutch C is constructed by the normally open type, it is possible to realize the parking lock without stopping the engine 10 and without controlling the engagement/disengagement of the dual clutch C. Further, since a crankshaft of the engine 10 is not required to be turned with the engine 10 kept stopped and since the mass in effecting the gear shifting is decreased, it is possible to reduce the drive power required for each shift actuator 40 which is operated both in performing the parking lock and in releasing the parking lock.

In the present embodiment, the parking lock is realized in the so-called "double-meshing" state which is made through the connection between the gear trains 21 a, 21 b, 28a, 28b for power transmission at the first speed and the gear trains 27a, 27b, 27c, 27d, 29a, 29b for power transmission in the reverse. Thus, since the parking lock function can be added to the gear transmission 1 without providing any members particularly designed for the parking lock, it is possible to reduce the manufacturing cost with a reduction in the number of parts.

Further, the shift clutch portions for the first speed stage which are brought into meshing at the time of the parking lock are constituted by the first speed engaging member S1 of the first shift clutch 30A and the sleeve M meshing therewith, and the side surfaces S1 b on each gear tooth of the first speed engaging member S1 and the side surfaces Mb on each gear tooth of the mating sleeve M are formed to extend linearly in parallel to the axial direction. Likewise, the shift clutch portions for the reverse stage which are also brought into meshing at the time of the parking lock are constituted by the reverse engaging member SR of the third shift clutch 30 and the sleeve M meshing therewith, and the side surfaces on each gear tooth of the reverse engaging member SR and the side surfaces on each gear tooth of the mating sleeve M are formed to extend linearly in parallel to the axial direction. That is, the gears of the sleeves M and the gears of the engaging members S1, SR are meshed in the circumferential direction to be restrained by each other but not engaged in the axial direction not to be restrained by each other. Accordingly, the drive power for the shift actuators 40 to move the sleeves M axially in releasing the parking lock can be reduced remarkably in comparison with the drive power required in the prior art transmission.

It is feared that because the gears of the sleeves M and the engaging members S1, SR are not engaged in the axial direction while being in meshing, a disengaging force exerted therebetween would generate a contact load between each sleeve M and a shift fork mating therewith. However, as mentioned earlier, the first speed stage gear train 21 a, 21 b and the reverse stage gear train 27c, 27d are constituted by the gear trains wherein the gears of the sleeves M and the engaging members S1, SR being able to mesh therewith respectively have the side surfaces (S1b shown in Figure 3) which extend linearly in parallel to the axial direction. Generally, it is for a short period of time that each of the first speed stage gear train 21 a, 21 b and the reverse stage gear train 27c, 27d is held in driving connection during the running of the vehicle. Therefore, even if a disengaging force is exerted between the sleeves M and the engaging members S1, SR, the disengaging force does not give rise to a problem because it is for a short period of time that a large contact load is imposed on the sleeves M and the mating shift fork N.

As described above, it is possible to reduce the drive power for the shift actuators 40 to generate at the time of releasing the parking lock, without giving rise to the problem that a contact load is exerted on the sleeve M and the mating shift fork N during the running of the vehicle. Further, the manufacturing cost can be reduced by forming the side surfaces on each gear tooth of the sleeves M and the side surfaces on each gear tooth of the engaging members S1, SR to surfaces which extend linearly in parallel to the axial direction.

Further, other shift clutches than the shift clutches for the first speed and the reverse stage are able to generate a counter force against the disengaging force which is exerted between each of the engaging members S2-S7 and the mating sleeve M when the same are held in engagement. That is, where the speed change stage gear trains except for the first speed stage gear train 21 a, 21 b and the reverse stage gear train 27c, 27d are in meshing during the running of the vehicle, it is possible to suppress the contact load exerted between the sleeves M and the mating shift forks N. In other words, the problem which is caused by the contact force generated between each sleeve M and the mating shift fork N can be suppressed with respect to the speed change gear trains which are subjected to the use for a long period of time during the running of the vehicle. In addition, since the shift clutches for the engaging members S2-S7 are not brought into engagement at the time of the parking lock, the shift actuators 40 for axially moving the sleeves M in releasing the parking lock can be designed without taking the contact force into consideration and hence, can be downsized.

Further, the anti-backslide mechanism (e.g., the worm mechanism 42, 43) is incorporated in each of the shift actuator mechanisms 40. Therefore, even if the disengaging force is exerted between each of the engaging members S1, SR and the mating sleeve M which are held in meshing during the running of the vehicle, it is possible for the anti-backslide mechanism to generate a counter force against the disengaging force. For an anti-backslide function, a detent mechanism may be applied in place of, or in combination with, the worm gear mechanism.

### (Second Embodiment)

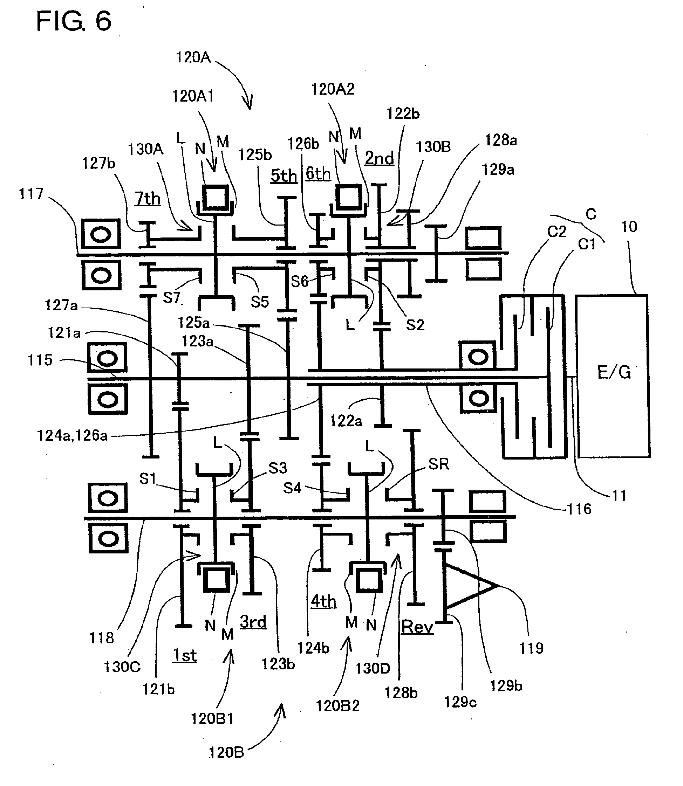

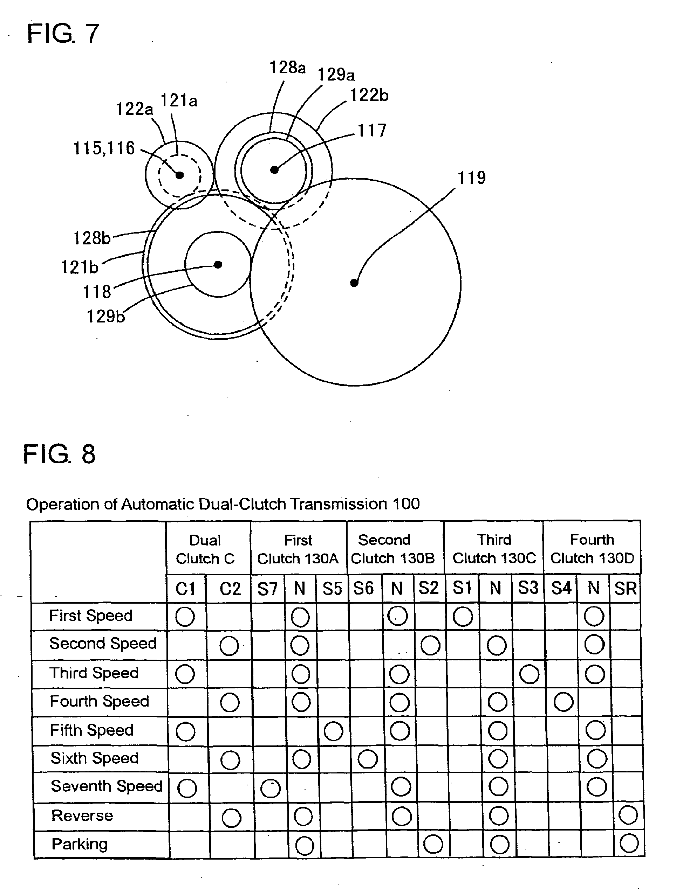

Hereafter, an automatic dual-clutch transmission 100 in a second embodiment will be described with reference to Figures 6 to 8. The transmission 100 in this embodiment is an automatic transmission with seven forward stages and one reverse stage for use in an FF (front-engine front-drive) vehicle. As shown in Figures 6 and 7, the transmission 100 has a first input shaft 115, a second input shaft 116, a first secondary shaft 117, a second secondary shaft 118, and an output shaft 119.

The second input 116 is formed to a tubular shape and is provided rotatably relative to the first input shaft 115 as it surrounds the first input shaft 115 in a coaxial alignment. The first input shaft 115 is formed to protrude its vehicle left side end beyond a vehicle left side end of the second input shaft 116. The first secondary shaft 117 and the second secondary shaft 118 are arranged in parallel to both of the input shafts 115, 116. The output shaft 119 is arranged in parallel to the first input shaft 115.

The transmission 100 incorporates a dual clutch C which is rotationally drivable by a prime mover 10 such as an engine. The dual clutch C is constructed as normally open type in which the engaging state is released when the engine 10 is held stopped or is running with the vehicle remaining stopped.

The dual clutch C has a first friction clutch C1 and a second friction clutch C2. Each of these friction clutches C1, C2 is able to be coupled with the prime mover 10. The first friction clutch C1 is connected to the first input shaft 115, whereas the second friction clutch C2 is connected to the second input shaft 116. Thus, the first friction clutch C1 transmits the rotational drive power of the prime mover 10 to the first input shaft 115, and the second friction clutch C2 transmits the rotational drive power of the prime mover 10 to the second input shaft 116.

Further, the transmission 100 is provided as gear trains with a first gear change mechanism 120A provided between both of the first and second input shafts 115, 116 and the first secondary shaft 117, a second gear change mechanism 120B provided between both of the first and second input shafts 115, 116 and the second secondary shaft 118, a first reduction gear train 129a, 129c for connecting the first secondary shaft 117 with the output shaft 119, and a second reduction gear train 129b, 129c for connecting the second secondary gear 118 with the output shaft 19.

The first gear change mechanism 120A is composed of a first gear shift unit 120A1 provided between the first input shaft 115 and the first secondary shaft 117 and a second gear shift unit 120A2 provided between the second input shaft 116 and the first secondary shaft 117.

The first gear shift unit 120A1 is composed of a seventh speed gear train 127a, 127b, a fifth speed gear train 125a, 125b and a first shift clutch 130A. The seventh speed gear train 127a, 127b includes a drive gear 127a fixed on the first input shaft 115 and a driven gear 127b rotatably provided on the first secondary shaft 117. The fifth speed gear train 125a, 125b includes a drive gear 125a fixed on the first input shaft 115 and a driven gear 125b rotatably provided on the first secondary shaft 117.

As shown in Figure 6, the first shift clutch 130A is composed of a clutch hub L, a seventh speed engaging member S7, a fifth speed engaging member S5, a pair of synchronizer rings O (not shown in Figure 6, but similar to those shown in Figure 2) and a sleeve M. The clutch hub L is fixed through a spline engagement on the first secondary shaft 17 between the seventh speed driven gear 127b and the fifth speed driven gear 125b in the axial direction. The seventh speed engaging member S7 and the fifth speed engaging member S5 are members which are respectively secured by, e.g., press fitting to the seventh speed driven gear 127b and the fifth speed driven gear 125b. In the same manner as those shown in Figure 2 in the foregoing first embodiment, the synchronizer rings O are respectively interposed between the clutch hub L and the respective engaging members S7, S5 on the axially opposite sides of the clutch hub L. The sleeve M is spline-engaged axially movably on the external circumference of the clutch hub L.

The first shift clutch 130A constitutes a synchromesh mechanism which enables one of the seventh and fifth speed driven gears 127b, 125b to engage with the first secondary shaft 117 and also enables both of the seventh and fifth speed driven gears 127b, 125b to be released from the first secondary shaft 117.

The sleeve M of the first shift clutch 130A is out of engagement with either of the engaging members S7, S5 in a neutral position shown in Figure 6. If shifted by a shift fork N engaged with an annular groove on the outer circumference thereof toward the seventh speed driven gear 127b side, the sleeve M is first spline-engaged with the synchronizer ring O on the same side and synchronizes the rotations of the first secondary shaft 117 and the seventh speed driven gear 127b. Then, the sleeve M is engaged at an internal gear thereof with an external spline formed on the external surface of the seventh speed engaging member S7 and bodily connects the first secondary shaft 117 with the seventh speed driven gear 127b to establish a seventh speed stage. If shifted by the shift fork N toward the fifth speed driven gear 125b side, the sleeve M likewise synchronizes the rotations of the first secondary shaft 117 and the fifth speed driven gear 125b and then, bodily connects both of them to establish a fifth speed stage.

The gear shape of the sleeve M constituting the first shift clutch 130A takes on the axial opposite ends thereof the same gear shape as that on the third speed engaging member S3 side of the sleeve M described in the foregoing first embodiment with reference to Figure 3. That is, a tip end portion Mc and side portions Md as shown in Figure 3 are formed at each of the axial opposite ends of each internal gear tooth on the sleeve M. Further, the gear shape of each of the seventh and fifth speed engaging members S7, S5 which constitute the first shift clutch 130A takes the same gear shape as the third speed engaging member S3 shown in Figure 3 in the foregoing first embodiment. That is, a tip end portion S3a and side portions S3b as shown in Figure 3 are formed on each external gear tooth on the seventh and fifth speed engaging members S7, S5. Therefore, in the first shift clutch 130A, the sleeve M and each of the seventh and fifth speed engaging members S7, S5 are engaged with each other in a direction to be released from the meshing state.

The second gear shift unit 120A2 is composed of a sixth speed gear train 126a, 126b, a second speed gear train 122a, 122b, a reverse stage drive gear 128a and a second shift clutch 130B. The sixth speed gear train 126a, 126 includes a drive gear 126a fixed on the second input shaft 116 and a driven gear 126b rotatably provided on the first secondary shaft 117. The second speed gear train 122a, 122b includes a drive gear 122a fixed on the second input shaft 116 and a driven gear 122b rotatably provided on the first secondary shaft 117. The reverse stage drive gear 128a is formed bodily with the second speed driven gear 122b and is rotatably provided on the first secondary shaft 117 on the side closer to the vehicle right side (the engine 10 side) than the second speed driven gear 122b. The reverse stage drive gear 128a is in meshing with a reverse stage driven gear 128b which is rotatably provided on the second secondary shaft 118.

The second shift clutch 130B constitutes a synchromesh mechanism which enables one of the sixth and second speed driven gears 126b, 122b to engage with the first secondary shaft 117 and also enables both of the sixth and second speed driven gears 126b, 122b to be released from the first secondary shaft 117.

The second shift clutch 130B is almost the same as the first shift clutch 130A in construction. While in the first shift clutch 130A, the fifth and seventh speed engaging members S5, S7 are respectively secured to the fifth and seventh speed driven gears 125b, 127b, the second shift clutch 130B differs from the first shift clutch 130A in that the sixth and second speed engaging members S6, S2 are respectively secured to the sixth and second speed driven gears 126b, 122b. Further, the gear shape of the sixth speed engaging member S6 takes the same shape as the gear shape of the aforementioned third speed engaging member S3 shown in Figure 3 in the foregoing first embodiment. The gear shape of the second speed engaging member S2 takes the same shape as the gear shape of the aforementioned first speed engaging member S1 shown in Figure 3 in the foregoing first embodiment. The gear shape of the sleeve M constituting the second shift clutch 130B takes the same shape as the gear shape of the sleeve M shown in Figure 3 in the foregoing first embodiment. Thus, in the second shift clutch 130B, the meshing of the sleeve M with the sixth speed engaging member S6 is such that they are engaged in a direction to be released from the meshing state. On the contrary, when the sleeve M is in meshing with the second speed engaging member S2, they are not engaged in the axial direction.

The sleeve M of the second shift clutch 130B is out of engagement with either of the engaging members S6, S2 in a neutral position shown in Figure 6. If shifted by a shift fork N engaged with an annular groove on the outer circumference thereof toward the sixth speed driven gear 126b side, the sleeve M synchronizes the rotations of the first secondary shaft 117 and the sixth speed driven gear 126b and then, bodily connects both of them to establish a sixth speed stage. If shifted by the shift fork N toward the second speed driven gear 122b side, the sleeve M synchronizes the rotations of the first secondary shaft 117 and the second speed driven gear 122b and then, bodily connects both of them to establish a second speed stage.

Each of shift actuators for moving the shift forks N in the axial direction is the same as that shown in Figure 4 in the foregoing first embodiment, and detailed description regarding the shift actuators will be omitted for the sake of brevity. Each of the shift actuators 40 takes the construction that meshes a worm gear 42 with a worm wheel 43, and therefore, has an anti-backslide function.

The second gear change mechanism 120B is composed of a third gear shift unit 120B1 provided between the first input shaft 115 and the second secondary shaft 118 and a fourth gear shift unit 120B2 provided between the second input shaft 116 and the second secondary shaft 118.

The third gear shift unit 120B1 is composed of a first speed gear train 121 a, 121 b, a third speed gear train 123a, 123b and a third shift clutch 130C. The first speed gear train 121 a, 121 b includes a drive gear 121 a fixed on the first input shaft 115 and a driven gear 121b rotatably provided on the second secondary shaft 118. The third speed gear train 123a, 123b includes a drive gear 123a fixed on the first input shaft 115 and a driven gear 123b rotatably provided on the second secondary shaft 118.

The third shift clutch 130C takes substantially the same construction as the first shift clutch 130A. The third shift clutch 130C constitutes a synchromesh mechanism which enables one of the first speed driven gear 121 b and the third speed driven gear 123b to engage with the second secondary shaft 118 and also enables both of the first and third speed driven gears 121 b, 123b to be released from the second secondary shaft 118.

The sleeve M of the third shift clutch 130C is out of engagement with either of the first and third speed engaging members S1, S3 in a neutral position shown in Figure 6. If shifted by a shift fork N engaged with an annular groove on the outer circumference thereof toward the first speed driven gear 121 b side, the sleeve M synchronizes the rotations of the second secondary shaft 118 and the first speed driven gear 121 b and then, bodily connects both of them to establish a first speed stage. If shifted by the shift fork N toward the third speed driven gears 123b side, the sleeve M synchronizes the rotations of the second secondary shaft 118 and the third speed driven gear 123b and then, bodily connects both of them to establish a third speed stage.

The gear shape of the sleeve M constituting the third shift clutch 130C takes on the axial opposite ends thereof the same gear shape as that of the third speed engaging member S3 side of the sleeve M described in the foregoing first embodiment with reference to Figure 3. That is, a tip end portion Mc and side portions Md as shown in Figure 3 are formed at each of the axial opposite ends of each internal gear tooth on the sleeve M. Further, the gear shape of each of the first and third speed engaging members S1, S3 which constitute the third shift clutch 130C takes the same gear shape as the gear shape of the third speed engaging member S3 shown in Figure 3 in the foregoing first embodiment. That is, a tip end portion S3a and side portions S3b as shown in Figure 3 are formed on each external gear tooth of the first and third speed engaging members S1, S3. Therefore, in the third shift clutch 130C, the meshing between the sleeve M and each of the first and third speed engaging members S1, S3 is such that they are engaged with each other in a direction to be released from the meshing state.

The fourth gear shift unit 120B2 is composed of a fourth speed gear train 124a, 124b, a reverse stage driven gear 128b and a fourth shift clutch 130D. The fourth speed gear train 124a, 124b includes a drive gear 124a fixed on the second input shaft 116 and a driven gear 124b rotatably provided on the second secondary shaft 118. The reverse stage driven gear 128b is rotatably provided on the second secondary shaft 118.

The fourth shift clutch 130D constitutes a synchromesh mechanism which enables one of the fourth speed driven gear 124b and the reverse stage driven gear 128b to engage with the second secondary shaft 118 and also enables both of the fourth speed driven gear 124b and the reverse stage driven gear 128b to be released from the second secondary shaft 118.

The fourth shift clutch 130D is almost the same as the second shift clutch 130B in construction. While in the second shift clutch 130B, the second and sixth speed engaging members S2, S6 are secured respectively to the second and sixth speed driven gears 122b, 126b, the fourth shift clutch 130D differs from the second shift clutch 130B in that the fourth speed engaging member S4 and the reverse engaging member SR are respectively secured to the fourth speed driven gear 124b and the reverse stage driven gear 128b. Further, the gear shape of the fourth speed engaging member S4 takes the same shape as the gear shape of the aforementioned third speed engaging member S3 shown in Figure 3 in the foregoing first embodiment. The gear shape of the reverse engaging member SR takes the same shape as the gear shape of the aforementioned first speed engaging member S1 shown in Figure 3 in the foregoing first embodiment. The gear shape of the sleeve M constituting the fourth shift clutch 130D takes the same shape as the gear shape of the aforementioned sleeve M shown in Figure 3 in the foregoing embodiment. Thus, in the fourth shift clutch 130D, the meshing of the sleeve M with the fourth speed engaging member S4 is such that they are engaged in a direction to be released from the meshing state. On the contrary, when the sleeve M is in meshing with the reverse engaging member SR, they are not engaged in the axial direction.

The sleeve M of the fourth shift clutch 130D is out of engagement with either of the engaging members S4, SR in a neutral position shown in Figure 6. If shifted by a shift fork N engaged with an annular groove on the outer circumference thereof toward the fourth speed driven gear 124b side, the sleeve M synchronizes the rotations of the second secondary shaft 118 and the fourth speed driven gear 124b and then, bodily connects both of them to establish a fourth speed stage. If shifted by the shift fork N toward the reverse stage driven gear 128b side, the sleeve M synchronizes the rotations of the second secondary shaft 118 and the reverse stage driven gear 128b and then, bodily connects both of them. That is, the second speed gear train 122a, 122b, the reverse stage drive gear 128a and the reverse stage driven gear 128b are used to establish the reverse stage.

### (Operation of Second Embodiment)

Next, the operation of the automatic dual-clutch transmission 100 in the second embodiment will be described with reference to Figure 8. A controller (not shown) for the transmission 100 controls the first and second friction clutches C 1, C2 of the dual clutch C and the first to fourth shift clutches 130A-130D to operate as indicated in Figure 8 in dependence on the operating states of the vehicle such as throttle opening degree, engine rotational speed, vehicle speed and the like. In the state of an out-of-operation, the first and second friction clutches C1, C2 of the dual clutch C are both released, and each of the first to fourth shift clutches 130A-130D is in the neutral position.

When the engine 10 is operated with the vehicle remaining stopped, the same state as the aforementioned state of the out-of-operation is maintained. When a shift lever (not shown) of the dual-clutch gear transmission 100 is set to a forward position after the engine 10 is operated with the vehicle remaining stopped, the controller brings the first speed engaging member S1 of the third shift clutch 130C into engagement and holds each of other clutches in the neutral position, as indicated at "First Speed" in Figure 8, whereby the first seed stage is established. In this state, if the throttle opening degree is increased to make the engine 10 rotate beyond a predetermined rotational speed, the controller gradually increases the engaging force of the first friction clutch C1 of the dual clutch C to meet the throttle opening degree. Thus, the drive torque of the drive shaft 11 is transmitted from the first friction clutch C1 to the output shaft 119 through the first input shaft 115, the first speed gear train 121 a, 121 b, the first speed engaging member S1 of the third shift clutch 130A, the second secondary shaft 118, and the second reduction gear train 129b, 129c, whereby the vehicle begins to run at the first speed.

When with an increase in the throttle opening degree, the operating state of the vehicle comes to a state suitable for the second speed running, the controller first brings the second speed engaging member S2 of the second shift clutch 130B into engagement to establish the second speed stage, then shifts the dual clutch C toward the second friction clutch C2 side to effect the shifting to the second speed running, and finally, releases the first speed engaging member S1 of the third shift clutch 130A, whereby the state is set to "Second Speed" indicated in Figure 5. In this case, the drive torque of the drive shaft 11 is transmitted from the second friction clutch C2 to the output shaft 119 through the second input shaft 116, the second speed gear train 122a, 122b, the second speed engaging member S2 of the second shift clutch 130B, the first secondary shaft 117, and the first reduction gear train 129a, 129c, whereby the vehicle begins to run at the second speed.

Likewise, the controller at each of the third to seventh speeds successively selects the speed change stage suitable for the operating state of the vehicle and alternately selects the first and second friction clutches C1, C2, whereby the running is performed at the speed change stage suitable for the operating state.

When the shift lever of the gear transmission 100 is set to the reverse position when the engine 10 is operated with vehicle remaining stopped, the controller detects the shifting to the reverse position and, as indicated at "Reverse" in Figure 8, brings the reverse engaging member SR of the fourth shift clutch 130D into engagement and holds other clutches in the neutral position to establish the reverse stage. When with an increase in the throttle opening degree, the rotational speed of the engine 10 exceeds a predetermined low rotational speed, the controller gradually increases the engaging force of the second friction clutch C2 of the dual clutch C to meet the throttle opening. Thus, the drive torque of the drive shaft 11 is transmitted from the second friction clutch C2 to the output shaft 119 through the second input shaft 116, the second speed gear train 122a, 122b, the reverse stage gear train 128a, 128b, the reverse engaging member SR of the fourth shift clutch 130D, the second secondary shaft 118, and the second reduction gear train 129b, 129c, whereby the vehicle begins to run backward.

When the shift lever of the gear transmission 100 is set to a parking position with the vehicle remaining stopped, the controller detects the shifting to the parking position and, as indicated at "Parking" in Figure 8, brings the second speed engaging member S2 of the second shift clutch 130B into engagement and also simultaneously brings the reverse engaging member SR of the fourth shift clutch 130D into engagement. With the engagement of the second speed engaging member S2, there is made a state that the rotational power can be transmitted in one direction from the second input shaft 116 to the output shaft 119 through the second speed gear train 122a, 122b, the second speed engaging member S2 of the second shift clutch 130B, the first secondary shaft 117, and the first reduction gear train 129a, 129c. With the engagement of the reverse engaging member SR, there is made another state that the rotational power can be transmitted in the opposite direction from the second input shaft 116 to the output shaft 119 through the second speed gear train 122a, 122b, the reverse stage gear train 128a, 128b, the reverse engaging member SR of the fourth shift clutch 130D, the second secondary shaft 118, and the second reduction gear train 129b, 129c. Accordingly, a so-called "double-meshing" state is made through the connection between the second speed gear train 122a, 122b and the first reduction gear train 129a, 129c in the forward direction and through the connection between the reverse stage gear train 128a, 128b and the second reduction gear train 129b, 129c in the reverse direction, whereby a parking lock is established. The transmission 100 in the second embodiment can achieve substantially the same effects and advantages as those in the foregoing first embodiment.

Various features and many of the attendant advantages in the foregoing embodiments will be summarized as follows:

In each of the foregoing first and second embodiments typically shown in Figures 2 to 4, the low speed stage shift clutch 30A, S1; 130B, S2 and the reverse stage shift clutch 30C, SR; 130D, SR are simultaneously brought into engagements to establish a parking lock in performing a parking. In each of the low speed stage shift clutch 30A, S1; 130B, S2 and the reverse stage shift clutch 30C, SR; 130D, SR, the gears of the engaging member S1, SR; S2, SR and the sleeve M are able to mesh with each other at the side surfaces S1b, Mb thereof which are formed to extend linearly in parallel to the axial direction thereof. Thus, the gears of the engaging members S1, SR; S2, SR and the gears of the sleeves M respectively mating therewith are able to mesh with each other in the circumferential direction but is prevented from meshing with each other in the axial direction. Accordingly, the drive power required for the shift actuators 40 which axially move the sleeves M mating with the engaging members S1, SR; S2, SR in releasing the parking lock can be reduced remarkably in comparison with the drive power required in the prior art transmission.

It is feared that because the gears of the engaging member S1, SR; S2, SR and the sleeve M are not engaged in the axial direction while being in meshing, a disengaging force exerted therebetween would generate a contact load between the sleeve M and the shift fork N mating therewith. However, in the present invention, the gear train in which the side surfaces Mb, Slb of the sleeve M and the engaging member S1, SR; S2, SR are formed to extend linearly in parallel to the axial direction is set to each of the low speed stage gear train 21 a, 21 b; 122a, 122b and the reverse stage gear train 27a-27d; 122a, 112b, 128a, 128b. Generally, it is for a short period of time that low speed stage gears or reverse stage gears are held in meshing during the running of the vehicle. Therefore, even if a disengaging force is exerted between the engaging member mating S1, SR; S2, SR and the sleeve M mating therewith, such disengaging force does not give rise to a problem because it is for a short period of time that a large contact load is imposed on the sleeve M and the mating shift fork N.

As described above, according to the present invention, it is possible to reduce the drive power for the shift actuator 40 to generate at the time of releasing the parking lock, without giving rise to the problem that a contact load is exerted on the sleeve M and the mating shift fork N during the running of the vehicle. Further, the manufacturing cost can be reduced by forming the side surfaces S1 b of the gear of the engaging member S1, SR; S2, SR and the side surfaces Mb on the gear of the mating sleeve M to the surfaces which extend linearly in parallel to the axial direction.

Also in each of the foregoing first and second embodiments typically shown in Figures 1, 6 and 3, the engaging member S1, SR; S2, SR and the sleeve M in each of the low speed stage shift clutch 30A, S1; 130B, S2 and the reverse stage shift clutch 30C, SR; 130D, SR are able to mesh with each other at side surfaces S1b, Mb thereof which are formed to extend linearly in parallel to the axial direction thereof. Therefore, the drive power required for the shift actuator 40 which moves the sleeve M axially in releasing the parking lock can be reduced, and hence, the manufacturing cost can be reduced further.

Also in each of the foregoing first embodiment typically shown in Figures 1, 2 and 3, since the low speed stage gear train in which the gears of the sleeve M and the engaging member S1; S2 respectively have the side surfaces Mb, S1b formed to extend linearly in parallel in the axial direction is set to the first speed stage gear train 21 a, 21 b, it is possible to reliably suppress a problem which may arise during the running of the vehicle.

Also in each of the foregoing first and second embodiments typically shown in Figures 1, 6 and 3, the engaging member and the sleeve in each of other stage shift clutches than the low speed stage shift clutch 30A, S1; 130B, S2 and the reverse stage shift clutch 30C, SR; 130D, SR are provided with the gears whose teeth are formed to extend linearly but not in parallel to the axial direction to be engaged with each other in the direction to be released from the meshing state and are able to generate a counter force against a disengaging force which may be exerted therebetween. That is, when each of other stage shift clutches than the low speed stage shift clutch 30A, S1; 130B, S2 and the reverse stage shift clutch 30C, SR; 130D, SR is in engagement, it is possible to prevent a contact force from being exerted between the sleeve M and the mating shift fork N. In other words, in each of the higher speed stage gear trains which are used for a long period of time during the running of the vehicle, the gear shapes S3b, Md of the engaging member and the sleeve are formed to extend linearly but not in parallel to the axial direction, and therefore, it is possible to suppress a problem which is caused by the contact load exerted between the sleeve M and the mating shift fork N. Further, since such other stage shift shift clutches are not brought into engagement in setting up the parking lock, the shift actuators 40 for axially moving the sleeves M in releasing the parking lock can be designed without taking the contact force into consideration and hence, can be downsized.

Also in each of the foregoing first and second embodiments typically shown in Figure 4, since each of the shift actuators 40 incorporates the anti-backslide mechanism 42, 43 such as, e.g., worm mechanism or detent mechanism therein, it is possible for the anti-backslide mechanism 42, 43 to generate a counter force against the disengaging force even if the same is generated when the sleeve and the engaging member are in meshing.

Also in each of the foregoing first and second embodiments typically shown in Figures 1 and 6, since the dual clutch C is configured to be released from the engaging state when the vehicle is stopped, it is possible to establish the parking lock without stopping the engine 10 of the vehicle. Further, since a crankshaft of the engine 10 is not required to be turned when the engine 10 is out of operation, and since the mass required to bring gears into meshing is decreased, it is possible to diminish the drive power required for the shift actuators 40 both in establishing the parking lock and in releasing the parking lock.

A clutch of the type that releases the engaging state when the vehicle is stopped may be called "normally open type clutch". The normally open type dual clutch C used in the foregoing embodiments encompasses a type that the engaging state of the dual clutch is released only when the drive power of a clutch actuator therefor is lowered to a certain level, and also encompasses another type that the drive power of the clutch actuator is used to positively release the engaging state of the dual clutch. That is, the former type is designed not to drive the clutch actuator in releasing the engaging state of the dual clutch when vehicle is stopped, while the latter type is designed to drive the clutch actuator in releasing the engaging state of the dual clutch when vehicle is stopped.

Obviously, further numerous modifications and variations of the present invention are possible in light of the above teachings. It is therefore to be understood that within the scope of the appended claims, the present invention may be practiced otherwise than as specifically described herein.

## Claims

1. An automatic dual-clutch transmission for a vehicle, comprising:
a first input shaft (15; 115) and a second input shaft (16; 116) arranged mutually coaxially;
a first secondary shaft (17; 117) and a second secondary shaft (18; 118) arranged in parallel to the first and second input shafts (15, 16; 115, 116);
a dual clutch (C) having a first clutch (C1) for transmitting the rotational drive power from a prime mover (10) to the first input shaft (15; 115) and a second clutch (C2) for transmitting the rotational drive power to the second input shaft (16; 116);
a first gear change mechanism (20A; 120A) provided between both of the input shafts (15, 16; 115, 116) and the first secondary shaft (17; 117) and having gear trains of plural stages including a predetermined low speed stage (21a, 21b; 122a, 122b), and a first shift clutch (30A; 130B) for bringing the gear trains into engagements with both of the input shafts (15, 16; 115, 116) and the first secondary shaft (17; 117) or disengagements therefrom;
a second gear change mechanism (20B; 120B) provided between both of the input shafts (15, 16; 115, 116) and the second secondary shaft (18; 118) and having gear trains of plural stages including a reverse stage gear train (27a-27d; 122a, 122b, 128a, 128b), and a second shift clutch (30C; 130D) for bringing the gear trains of the second gear change mechanism (20B; 120B) into engagements with both of the input shafts (15, 16; 115, 116) and the second secondary shaft (18; 118) or disengagements therefrom;
an output shaft (19; 119) for receiving the rotation of either of the first and second input shafts (15, 16; 115, 116) and the first and second secondary shafts (17, 18; 117, 118);
gears (21a; 122a) provided on one of the first and second input shafts (15, 16; 115, 116) and constituting a part of the low speed stage gear train (21a, 21b; 122a, 122b) and a part of the reverse stage gear train (27a-27d; 122a, 122b, 128a, 128b);
a low speed stage shift clutch (30A, S1; 130B, S2) included in the first shift clutch (30A; 130B) for bringing one of the first and second input shafts (15, 16; 115, 116) into engagement with the low speed stage gear train (21a, 21b; 122a, 122b); and
a reverse stage shift clutch (30C, SR; 130D, SR) included in the second shift clutch (30C; 130D) for bringing one of the first and second input shafts (15, 16; 115, 116) into engagement with the reverse stage gear train (27a-27d; 122a, 122b, 128a, 128b);
wherein in performing a parking, the low speed stage shift clutch (30A, S1; 130B, S2) and reverse stage shift clutch (30C, SR; 130D, SR) are simultaneously engaged to establish a parking lock through connections of one of the first and second input shafts (15, 16; 115, 116) with the low speed stage gear train (21a, 21b; 122a, 122b) and the reverse stage gear train (27a-27d; 122a, 122b, 128a, 128b);
wherein each of the first and second shift clutches (30A, 30C; 130B, 130D)) comprises:
a clutch hub (L) fixed on one of the first and second secondary shafts (17, 18; 117, 118) and having a gear formed on an external surface thereof;
an engaging member (S, SR) rotatably provided on said one of the first and second secondary shafts (17, 18; 117, 118) and having a gear formed on an external surface thereof; and
a sleeve (M) being axially movable relative to the clutch hub (L) and the engaging member (S, SR) and formed at an internal surface thereof with a gear which is always in meshing with the gear of the clutch hub (L) and which is able to be brought into engagement with the gear of the engaging member (S, SR) or disengagement therefrom;
**characterized in that**
in each of the low speed stage shift clutch (30A, S1; 130B, S2) and the reverse stage shift clutch (30C, SR; 130D, SR), the gears of the engaging member (S1, SR) and the sleeve (M) are able to mesh with each other at side surfaces (S1b, Mb) thereof which are formed to extend linearly in parallel to an axial direction thereof.

2. The automatic dual-clutch transmission as set forth in Claim 1, wherein the low speed stage shift clutch (30A, S1) is a first speed stage shift clutch (30A).

3. The automatic dual-clutch transmission as set forth in Claim 1 or 2, wherein in each of the first and second shift clutches (30A, 30C; 130B, 130D) except for the low speed stage shift clutch (30A, S1; 130B, S2) and the reverse stage shift clutch (30C, SR; 130D, SR), the gears of the engaging member (S) and the sleeve (M) are able to mesh with each other at the side surfaces (S3b, Md) thereof which are formed to extend linearly but not in parallel to the axial direction, so that the gear of the sleeve (M) and the gear of the engaging member (S) are engaged with each other in a direction to be released from a meshing state.

4. The automatic dual-clutch transmission as set forth in any one of Claims 1 to 3, further comprising:
shift actuator mechanisms (40) respectively mating with the sleeves (M) of the first and second shift clutches (30A, 30C; 130B, 130D) for respectively axially moving the mating sleeves (M), each of the shift actuator mechanisms (40) incorporating an anti-backslide mechanism (42, 43) therein.

5. The automatic dual-clutch transmission as set forth in any one of Claims 1 to 4, wherein the dual clutch (C) is configured to be released from the engaging state when the vehicle is stopped.

## Patentansprüche

1. Automatisches Doppelkupplungsgetriebe für ein Fahrzeug mit:
einer ersten Eingangswelle (15; 115) und einer zweiten Eingangswelle (16; 116), die koaxial zueinander angeordnet sind;
einer ersten Sekundärwelle (17; 117) und einer zweiten Sekundärwelle (18; 118), die parallel zu der ersten und der zweiten Eingangswelle (15, 16; 115, 116) angeordnet sind;
einer Doppelkupplung (C) mit einer ersten Kupplung (C1) zum Übertragen der Drehantriebsleistung von einer Antriebsquelle (10) zu der ersten Eingangswelle (15; 115) und einer zweiten Kupplung (C2) zum Übertragen der Drehantriebsleistung zu der zweiten Eingangswelle (16; 116);
einem ersten Gangänderungsmechanismus (20A, 120A), der zwischen beiden Eingangswellen (15, 16; 115, 116) und der ersten Sekundärwelle (17; 117) angeordnet ist, und der Getriebezüge mehrerer Stufen, einschließlich einer vorbestimmten Niedriggeschwindigkeitsstufe (21a, 21b; 122a, 122b), und eine erste Schaltkupplung (30A; 130B) hat, um die Getriebezüge in Eingriff mit beiden Eingangswellen (15, 16; 115, 116) und der ersten Sekundärwelle (17; 117) zu bringen oder außer Eingriff von diesen zu bringen;
einem zweiten Gangänderungsmechanismus (20B, 120B), der zwischen beiden Eingangswellen (15, 16; 115, 116) und der zweiten Sekundärwelle (18; 118) vorgesehen ist, und der Getriebezüge mehrerer Stufen, einschließlich eines Rückwärtsstufengetriebezugs (27a-27d; 122, 122b, 128a, 128b), und eine zweite Schaltkupplung (30C; 130D) hat, um die Getriebezüge des zweiten Gangänderungsmechanismus (20B; 120B) in Eingriff mit beiden Eingangswellen (15, 16; 115, 116) und der zweiten Sekundärwelle (18; 118) zu bringen oder außer Eingriff von diesen zu bringen;
einer Ausgangswelle (19; 119) zum Empfangen der Drehung von einer von der ersten und zweiten Eingangswelle (15, 16; 115, 116) und der ersten und zweiten Sekundärwelle (17, 18; 117, 118);
Zahnrädern (21a; 122a), die an einer von der ersten und der zweiten Eingangswelle (15, 16; 115, 116) vorgesehen sind und einen Teil des Niedriggeschwindigkeitsstufengetriebezugs (21a, 21b; 122a, 122b) und einen Teil des Rückwärtsstufengetriebezugs (27a-27d; 122a, 122b, 128a, 128b) bilden;
einer Niedriggeschwindigkeitsstufenschaltkupplung (30A, S1; 130B, S2), die in der ersten Schaltkupplung (30A; 130B) umfasst ist, um eine von der ersten und der zweiten Eingangswelle (15, 16; 115, 116) mit dem Niedriggeschwindigkeitsstufengetriebezug (21a, 21; 122a, 122b) in Eingriff zu bringen; und
einer Rückwärtsstufenschaltkupplung (30C, SR; 130D, SR), die in der zweiten Schaltkupplung (30C; 130D) umfasst ist, um eine von der ersten und der zweiten Eingangswelle (15, 16; 115, 116) mit dem Rückwärtsstufengetriebezug (27a-27d; 122a, 122b, 128a, 128b) in Eingriff zu bringen;
wobei beim Durchführen eines Parkens die Niedriggeschwindigkeitsstufenschaltkupplung (30A, S1; 130B, S2) und die Rückwärtsstufenschaltkupplung (30C, SR; 130D, SR) gleichzeitig in Eingriff sind, um eine Parksperre durch Verbindungen von einer von der ersten und der zweiten Eingangswelle (15, 16; 115, 116) mit dem Niedriggeschwindigkeitsstufengetriebezug (21a, 21b; 122a, 122b) und dem Rückwärtsstufengetriebezug (27a-27d; 122a, 122b, 128a, 128b) einzurichten;
wobei jede von der ersten und der zweiten Schaltkupplung (30A, 30C; 130B, 130D) Folgendes aufweist:
eine Kupplungsnabe (L), die an einer von der ersten und der zweiten Sekundärwelle (17, 18; 117, 118) fixiert ist und ein Zahnrad hat, das an einer Außenfläche von dieser ausgebildet ist;
ein Eingriffsbauteil (S, SR), das drehbar an der einen von der ersten und der zweiten Sekundärwelle (17, 18; 117, 118) vorgesehen ist und ein Zahnrad hat, das an einer Außenfläche von diesem ausgebildet ist; und
eine Hülse (M), die relativ zu der Kupplungsnabe (L) und dem Eingriffsbauteil (S, SR) axial bewegbar ist und an deren Innenfläche ein Zahnrad ausgebildet ist, das immer mit dem Zahnrad der Kupplungsnabe (L) kämmt und das mit dem Zahnrad des Eingriffsbauteils (S, SR) in Eingriff gebracht werden kann oder von diesem außer Eingriff gebracht werden kann,
**dadurch gekennzeichnet, dass**
in jeder von der Niedriggeschwindigkeitsstufenschaltkupplung (30A, S1; 130B, S2) und der Rückwärtsstufenschaltkupplung (30C, SR; 130D, SR) die Zahnräder des Eingriffsbauteils (S1, SR) und der Hülse (M) an Seitenflächen (S1b, Mb) von diesen miteinander kämmen können, die ausgebildet sind, um sich gerade und parallel zu einer Axialrichtung von diesen zu erstrecken.

2. Automatisches Doppelkupplungsgetriebe nach Anspruch 1, wobei die Niedriggeschwindigkeitsstufenschaltkupplung (30A, S1) eine Schaltkupplung (30A) einer ersten Geschwindigkeitsstufe ist.

3. Automatisches Doppelkupplungsgetriebe nach Anspruch 1 oder 2, wobei in jeder von der ersten und der zweiten Schaltkupplung (30A, 30C; 130B, 130D), mit Ausnahme der Niedriggeschwindigkeitsstufenschaltkupplung (30A, S1; 130B, S2) und der Rückwärtsstufenschaltkupplung (30C, SR; 130D, SR), die Zahnräder des Eingriffsbauteils (S) und der Hülse (M) an Seitenflächen S3b, Md) von diesen miteinander kämmen können, die ausgebildet sind, um sich gerade aber nicht parallel zu der Axialrichtung zu erstrecken, so dass das Zahnrad der Hülse (M) und das Zahnrad des Eingriffsbauteils (S) miteinander in einer Richtung im Eingriff sind, um von einem Kämmzustand gelöst zu werden.

4. Automatisches Doppelkupplungsgetriebe nach einem der Ansprüche 1 bis 3, mit:
Schaltstellgliedmechanismen (40), die jeweils mit den Hülsen (M) der ersten und der zweiten Schaltkupplung (30A, 30C; 130B, 130D) zusammenpassen zum jeweiligen axialen Bewegen der zusammenpassenden Hülsen (M), wobei jeder der Schaltstellgliedmechanismen (40) einen Antizurückrutschmechanismus (42, 43) beinhaltet.

5. Automatisches Doppelkupplungsgetriebe nach einem der Ansprüche 1 bis 4, wobei die Doppelkupplung (C) gestaltet ist, um von dem Eingriffszustand gelöst zu werden, wenn das Fahrzeug gestoppt ist.

## Revendications

1. Transmission automatique à embrayage double pour un véhicule, comportant :
un premier arbre d'entrée (15 ; 115) et un deuxième arbre d'entrée (16 ; 116) disposés de manière mutuellement coaxiale ;
un premier arbre secondaire (17 ; 117) et un deuxième arbre secondaire (18 ; 118) disposés parallèlement aux premier et deuxième arbres d'entrée (15, 16 ; 115, 116) ;
un embrayage double (C) ayant un premier embrayage (C1) destiné à transmettre la puissance d'entraînement en rotation d'un moteur (10) au premier arbre d'entrée (15 ; 115) et un deuxième embrayage (C2) destiné à transmettre la puissance d'entraînement en rotation au deuxième arbre d'entrée (16 ; 116) ;
un premier mécanisme de changement de rapport (20A ; 120A) prévu entre les deux arbres d'entrée (15, 16 ; 115, 116) et le premier arbre secondaire (17 ; 117) et ayant des trains d'engrenage de plusieurs étages comprenant un étage à vitesse réduite prédéterminée (21a, 21b ; 122a, 122b), et un premier embrayage de changement de vitesse (30A ; 130B) destiné à amener les trains d'engrenage dans des engagements avec les deux arbres d'entrée (15, 16 ; 115, 116) et le premier arbre secondaire (17 ; 117) ou désengagements de ceux-ci ;
un deuxième mécanisme de changement de rapport (20B ; 120B) prévu entre les deux arbres d'entrée (15, 16 ; 115, 116) et le deuxième arbre secondaire (18 ; 118) et ayant des trains d'engrenage de plusieurs étages comprenant un train d'engrenage d'étage de marche arrière (27a à 27d ; 122a, 122b, 128a, 128b), et un deuxième embrayage de changement de vitesse (30C ; 130D) destiné à amener les trains d'engrenage du deuxième mécanisme de changement de rapport (20B ; 120B) dans des engagements avec les deux arbres d'entrée (15, 16 ; 115, 116) et le deuxième arbre secondaire (18 ; 118) ou des désengagements de ceux-ci ;
un arbre de sortie (19 ; 119) destiné à recevoir la rotation de chacun des premier et deuxième arbres d'entrée (15, 16 ; 115, 116) et des premier et deuxième arbres secondaires (17, 18 ; 117, 118) ;
des pignons (21a ; 122a) prévus sur un des premier et deuxième arbres d'entrée (15, 16 ; 115, 116) et constituant une partie du train d'engrenage d'étage à vitesse réduite (21a, 21b ; 122a, 122b) et une partie du train d'engrenage d'étage de marche arrière (27a à 27d ; 122a, 122b, 128a, 128b) ;
un embrayage de changement de vitesse d'étage à vitesse réduite (30A, S1 ; 130B, S2) inclus dans le premier embrayage de changement de vitesse (30A ; 130B) destiné à amener un des premier et deuxième arbres d'entrée (15, 16 ; 115, 116) en engagement avec le train d'engrenage d'étage à vitesse réduite (21a, 21b ; 122a, 122b) ; et
un embrayage de changement de vitesse d'étage de marche arrière (30C, SR ; 130D, SR) inclus dans le deuxième embrayage de changement de vitesse (30C ; 130D) destiné à amener un des premier et deuxième arbres d'entrée (15, 16 ; 115, 116) en engagement avec le train d'engrenage d'étage de marche arrière (27a à 27d ; 122a, 122b, 128a, 128b) ;
dans laquelle, en réalisant un stationnement, l'embrayage de changement de vitesse d'étage à vitesse réduite (30A, S1 ; 130B, S2) et l'embrayage de changement de vitesse d'étage de marche arrière (30C, SR ; 130D, SR) sont simultanément engagés afin d'établir un blocage de stationnement grâce à des connexions d'un des premier et deuxième arbres d'entrée (15, 16 ; 115, 116) avec le train d'engrenage d'étage à vitesse réduite (21a, 21b ; 122a, 122b) et le train d'engrenage d'étage de marche arrière (27a à 27d ; 122a, 122b, 128a, 128b) ;
dans lequel chacun des premier et deuxième embrayages de changement de vitesse (30A, 30C ; 130B, 130D) comporte :
un moyeu d'embrayage (L) fixé sur un des premier et deuxième arbres secondaires (17, 18 ; 117, 118) et ayant un pignon formé sur une surface externe de celui-ci ;
un élément d'engagement (S, SR) prévu de façon rotative sur ledit un des premier et deuxième arbres secondaires (17, 18 ; 117, 118) et ayant un pignon formé sur une surface externe de celui-ci ;
un manchon (M) qui est axialement mobile par rapport au moyeu d'embrayage (L) et à l'élément d'engagement (S, SR) et formé sur une surface interne de celui-ci avec un pignon qui est toujours en prise avec le pignon du moyeu d'embrayage (L) et qui peut être amené en engagement avec le pignon de l'élément d'engagement (S, SR) ou en désengagement de celui-ci ;
**caractérisée en ce que**
dans chacun de l'embrayage de changement de vitesse d'étage à vitesse réduite (30A, S1 ; 130B, S2) et de l'embrayage de changement de vitesse d'étage de marche arrière (30C, SR ; 130D, SR), les pignons de l'élément d'engagement (S1, SR) et le manchon (M) peuvent venir en prise l'un avec l'autre sur des surfaces latérales (S1b, Mb) de ceux-ci qui sont formées afin de s'étendre linéairement parallèlement à une direction axiale de ceux-ci .

2. Transmission automatique à embrayage double selon la revendication 1, dans laquelle l'embrayage de changement de vitesse d'étage à vitesse réduite (30A, S1) est un embrayage de changement de vitesse d'étage de première vitesse (30A) .

3. Transmission automatique à embrayage double selon la revendication 1 ou 2, dans laquelle dans chacun des premier et deuxième embrayages de changement de vitesse (30A, 30C ; 130B, 130D) excepté l'embrayage de changement de vitesse d'étage à vitesse réduite (30A, S1 ; 130B, S2) et l'embrayage de changement de vitesse d'étage de marche arrière (30C, SR ; 130D, SR), les pignons de l'élément d'engagement (S) et le manchon (M) peuvent être en prise l'un avec l'autre sur les surfaces latérales (S3b, Md) de ceux-ci qui sont formées afin de s'étendre linéairement mais pas parallèlement à la direction axiale; de telle sorte que le pignon du manchon (M) et le pignon de l'élément d'engagement (S) sont engagés l'un avec l'autre dans une direction de libération d'un état d'engrènement.

4. Transmission automatique à embrayage double selon l'une quelconque des revendications 1 à 3, comportant en outre :
des mécanismes d'actionneur de changement de vitesse (40) correspondant respectivement aux manchons (M) des premier et deuxième embrayages de changement de vitesse (30A, 30C ; 130B, 130D) afin de déplacer axialement de manière respective les manchons correspondants (M), chacun des mécanismes d'actionneur de changement de vitesse (40) incorporant un mécanisme anti-recul (42, 43).

5. Transmission automatique à embrayage double selon l'une quelconque des revendications 1 à 4, dans laquelle l'embrayage double (C) est configuré pour être libéré de l'état d'engagement quand le véhicule est arrêté.
